# EUROPEAN PATENT APPLICATION

(11) **EP 3 460 780 A1**
(43) Date of publication of application: **27.03.2019**
(21) Application number: 17798987.8
(22) Date of filing: 09.03.2017
(51) Int. Cl.: G09B 5/08, G06Q 50/20, G09B 7/07

(54) **LEARNING ASSISTANCE SYSTEM, LEARNING ASSISTANCE METHOD, AND LEARNER TERMINAL**

(30) Priority: 16.05.2016 JP 2016097993
(71) Applicant: Z-KAI Inc., Mishima-shi, Shizuoka 411-0033 (JP)
(72) Inventor: UEDA, Tomoya, Mishima-shi, Shizuoka, 411-0033 (JP); WATANABE, Jun, Mishima-shi, Shizuoka, 411-0033 (JP)
(74) Representative: Horn Kleimann Waitzhofer Patentanwälte PartG mbB
(86) International application number: PCT/JP2017/009592
(87) International publication number: WO 2017/199552

(57) **Abstract**

With respect to educational assistance methods using user terminals such as tablets and the like, the invention assists users with learning and utilizing connections between a plurality of knowledge items. Disclosed is an assistance device (200) for: storing knowledge items learnt by a user; determining whether there exist common characteristics between knowledge items learnt newly by the user and at least one of the knowledge items already learnt by the user; and responsive to the existence of common characteristics, causing the user's terminal (210) to present the existence of the characteristics.

## Description

### CROSS REFERENCE TO RELATED APPLICATIONS

This application claims priority to and benefit of the filing date of Japanese patent application No. 2016-097993 filed on May 16, 2016, which is hereby incorporated by reference in its entirety.

### TECHNICAL FIELD

The disclosure relates generally to educational assistance methods and learning assistance devices and, more particularly, to assistance methods and assistance devices for assisting users with learning or utilization of connections between a plurality of knowledge items.

### BACKGROUND

In recent years, educational services, provided via tablets, aimed at people such as middle school students, high school students and the like have started to appear (See, for example, PTL 1.).

One such service distributes learning materials via the Internet, in accordance with textbooks used in school and in synchrony with regularly scheduled tests to determine each student's degree of comprehension from information such as the correct response rate regarding the questions.

In Japan, the Curriculum Guidelines stipulates what is to be taught by the school with respect to the respective subjects, and the course-unit configurations and the like for the respective subjects are also stipulated therein.

### CITATION LIST

### Patent Literature

PTL 1: JP2015-102556A

### SUMMARY

### (Technical Problem)

However, there also exist educational needs that are not satisfied by textbook-conformant educational services such as those mentioned. According to the experience of the inventors, the situation does not allow for the enhancement of thinking capabilities of ambitious middle and high school students not solely concerned with high school and university entrance examination related tests; such students having higher expectations and stronger motivation. Such students require more than a year-wise and subject/course-unit wise learning progression. The situation does not allow for students to enhance their thinking capabilities with respect to discovering or utilizing organic connections between such knowledge items.

Present invention has been conceived to address these issues. The objective of present invention is to, with respect to educational assistance methods and educational assistance devices using user terminals such as tablets and the like, assist users with learning and utilizing connections between a plurality of knowledge items.

### (Solution to Problem)

In order to attain the abovementioned objective, a first aspect of the invention concerns an assistance method via an assistance device for assisting with learning, the assistance device characterized in that it comprises: storing knowledge items learnt by a user; determining whether there exist common characteristics between knowledge items learnt newly by the user and at least one of the knowledge items already learnt by the user; and responsive to the existence of common characteristics, causing the user's terminal to present the existence of the characteristics.

A second aspect of the invention concerns the first aspect, characterized in that the characteristics include at least either common concepts or thinking-types.

A third aspect of the invention concerns the first aspect, characterized in that the determination is performed by referring to a characteristics table having retained thereon correspondence relationships between knowledge items and characteristics.

A fourth aspect of the invention concerns the third aspect, characterized in that the method includes: recommending to a user, based on the knowledge items already learnt by the user and the characteristics table, knowledge items for subsequent learning.

A fifth aspect of the invention concerns any of the first through fourth aspects, characterized in that the determination is performed by referring to a learnt-knowledge table having retained thereon learnt knowledge items for respective users.

A sixth aspect of the invention concerns any of the first through fifth aspects, characterized in that the step causing presentation includes: displaying, on a display screen of the terminal, names, abbreviations or symbols of a plurality of knowledge items for which common characteristics exist, along with the existence of the common characteristics.

A seventh aspect of the invention concerns the sixth aspect, characterized in that the existence of the common characteristics is displayed by connecting the names, abbreviations or symbols of the plurality of knowledge items.

An eighth aspect of the invention concerns the seventh aspect, characterized in that the plurality of knowledge items comprises two or more knowledge items, and wherein the names, abbreviations or symbols of the plurality of knowledge items are connected in a ring-shaped manner.

A ninth aspect of the invention concerns the sixth aspect, characterized in that the existence of the common characteristics is displayed by the names, abbreviations or symbols of the characteristics.

A tenth aspect of the invention concerns any of the sixth through ninth aspects, characterized in that the method further includes: causing the terminal to display, responsive to election of displaying of the existence of the common characteristics, at least one of a commentary movie or exercise questions regarding the characteristics.

An eleventh aspect of the invention concerns any of the first through tenth aspects, characterized in that the method further includes: causing the terminal to: display, subsequent to the step causing presentation, a commentary pertaining to the characteristics; and display, subsequent to the display of the commentary, exercise questions pertaining to the characteristics.

A twelfth aspect of the invention concerns any of the first through eleventh aspects, characterized in that the respective knowledge items comprise one or more learning-units.

A thirteenth aspect of the invention concerns any of the first through twelfth aspects, characterized in that knowledge items targeted for learning by the user belong to any of a plurality of domains.

A fourteenth aspect of the invention concerns the twelfth or thirteenth aspect, characterized in that the common characteristics are common to both a first knowledge item belonging to a first domain and a second knowledge item belonging to a second domain different from the first domain.

A fifteenth aspect of the invention concerns the twelfth or thirteenth aspect, characterized in that the common characteristics are common to both a first knowledge item and a second knowledge item in the same domain as the first knowledge item, the second knowledge item chronologically separated, in terms of learning progression, from the first knowledge item by or more than by a prescribed number of chronological units.

A sixteenth aspect of the invention concerns causing a computer functioning as a learning assistance device to execute the following: determining whether there exist common characteristics between knowledge items learnt newly by a user and at least one of the knowledge items already learnt by the user; and responsive to the existence of common characteristics, causing the existence of the characteristics to be presented on the display screen of the user's terminal.

A seventeenth aspect of the invention concerns: determining whether there exist common characteristics between knowledge items learnt newly by a user and at least one of the knowledge items already learnt by the user; and responsive to the existence of common characteristics, causing the existence of the characteristics to be presented on the display screen of the user's terminal.

### (Effect of the Invention)

According to an aspect of the invention, where there exists common characteristics between knowledge items learnt newly by a user and one or more of the knowledge items already learnt by said user, the connection between the plurality of knowledge items sharing characteristics is presented on said user's terminal. By doing so, once a connection between the learnt knowledge items arises, a student may efficiently gain knowledge of the existence of such connection and may master utilization methods.

### BRIEF DESCRIPTION OF THE DRAWINGS

In the accompanying drawings:
FIG. 1 is a schematic diagram illustrating association of the course-units being subjected to learning according to an embodiment of the invention;
FIG. 2 is a schematic diagram illustrating an assistance device for assisting with learning or utilization of connections between a plurality of knowledge items according to an embodiment of the invention;
FIG. 3 is a schematic diagram illustrating the functional blocks of a user terminal according to an embodiment of the invention;
FIG. 4 is a flowchart illustrating an assistance method for assisting with learning or utilization of connections between a plurality of knowledge items according to an embodiment of the invention;
FIG. 5 is a diagram illustrating an exemplary characteristics table;
FIG. 6 is a diagram illustrating an example according to an embodiment of the invention in which the concepts of "length and angle" and "degree of similarity" are presented to the user as common characteristics; and
FIG. 7 is a screenshot illustrating a top-level screen of a mathematics course.

### DETAILED DESCRIPTION

The invention shall be described in detail in the detailed description set forth below with reference made to the drawings.

### (Summary of the Invention)

An assistance method for assisting users with learning or utilization of connections between a plurality of knowledge items according to an embodiment of the invention is disclosed.

In this embodiment, it may be assumed that knowledge items relating to mathematics are being targeted for learning by a user and that the respective knowledge items belong to any of a plurality of course-units within domains. Further, the respective knowledge items may comprise of one or more course-units or learning-units. The respective knowledge items may belong to the following domains: algebra; analysis; geometry; and statistics. Although algebra, analysis, and geometry generally are considered as the three pillars of mathematics the inventors, with respect to the present embodiment, are of the opinion that statistics would increase its prominence in education; hence, statistics is included therein. Further, biology and physics may be included. It should be noted that other embodiments of the invention may target for study subjects other than mathematics. Further, it should also be noted that even embodiments targeting mathematics could adopt different domain segmentation arrangements.

Algebra concerns numbers, expressions involving variables, equations and the like. Knowledge items or course-units belonging to this may include the following: positive and negative numbers; variables and expressions; linear equations; simultaneous equations; linear inequalities; expansion and factorization of expressions; square roots; quadratic equations; quadratic inequalities; set theory and logic; properties of integers; equations and proofs; complex numbers and equations; progressions etc.

Analysis concerns: functions, differential calculus, integral calculus and the like as means for acquiring insight into changes concerning phenomena. Knowledge items or course-units belonging to this may include the following: functions and the coordinate plane; proportional and inverse proportional relationships; linear functions; functions proportional to quadratic terms; quadratic functions; application of quadratic functions; management of functions; trigonometric functions; exponential functions; logarithmic functions; differentiation of polynomial functions; integration of polynomial functions; limits; differentiation of various functions; integration of various functions; velocity and acceleration; continuity; differential equations; and the like.

Geometry concerns: elementary shapes; the coordinate plane; shapes in space. Knowledge items or course-units belonging to this may include the following: planar shapes; shapes in space; planar shapes and angles; triangles and quadrangles; parallel lines and ratios; similarity; circles; Pythagorean theorem; circles and Pythagorean theorem; shapes in space; Menelaus' theorem and Ceva's theorem; the five centers of triangles; trigonometric ratios; shapes and equations; planar vectors; spatial vectors and spatial coordinates; the complex plane; quadratic curves; and the like.

Statistics concerns: summarization of data; analysis; computation of probabilities; and the like. Knowledge items or course-units belonging to this may include the following: organization of data; data analysis; counting of scenarios; probabilities; probabilities and progressions; sampling surveys; statistical speculations; and the like.

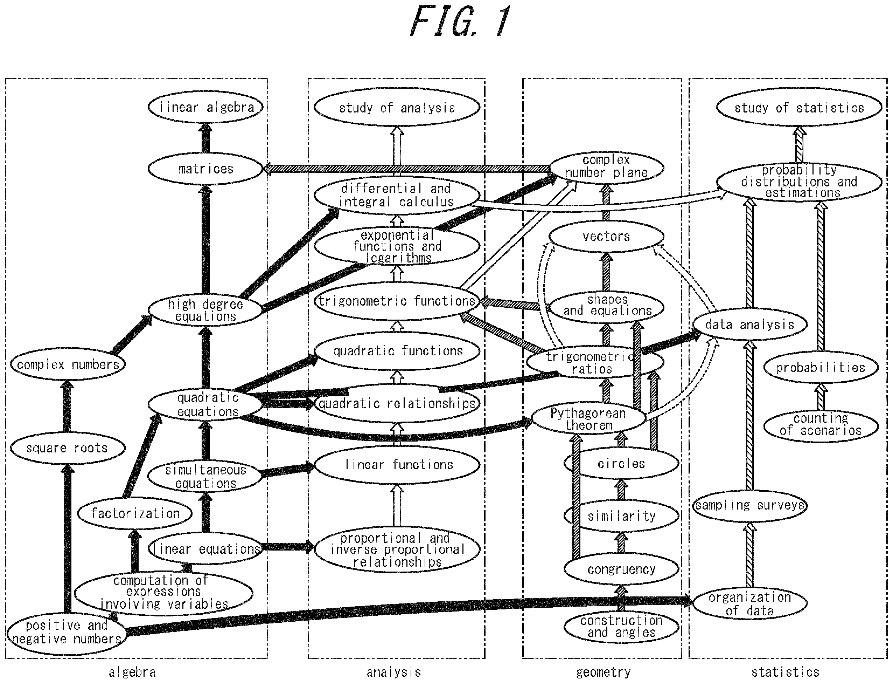

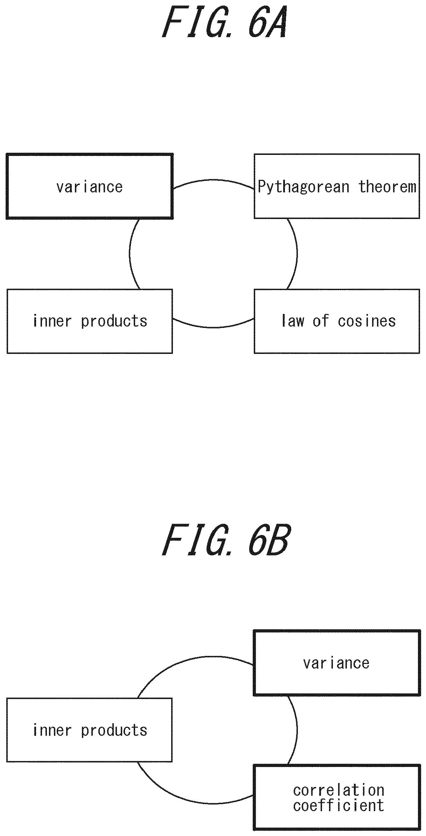

The respective knowledge items belonging to the respective domains are associated with at least another knowledge item belonging to the same domain. For example, the association is made according to the order in which abstraction or development progresses. FIG. 1 shows the course-units of the fields -- i.e. algebra, analysis, geometry, and statistics -- along with their associations. FIG. 6 shows, out of the knowledge items included in the respective course-units, the association of the knowledge items pertaining to the concepts of "length and angles" and "degree of similarity" as common characteristics. Some knowledge items may be associated with knowledge items of differing domains. Some knowledge items may be associated with two or more knowledge items preceding itself in terms of the chronological order of learning within the same domain. Further, some knowledge items may be associated with two or more knowledge items following itself in terms of the chronological order of learning within the same domain. Some knowledge items may be chronologically separated by or more than by a prescribed number of units; e.g. separation by two units and the like. For example: the knowledge item named "Pythagorean theorem" in FIG. 1 is allocated, according to the Curriculum Guidelines, to the third year of middle school; the knowledge item named "law of cosines" is included in the course-unit named "trigonometry" allocated to the first year of high school; the knowledge item named "inner product" is included in the course-unit named "vectors" allocated to the second year of high school; and the knowledge item named "variance" is included in the course-unit named "data analysis" allocated to the first year of high school. As such, where there is association between multiple knowledge items belonging to differing domains or course-units, as shown in FIGs 6(a) and (b), a figure showing this revelation to the user is displayed on the screen. Furthermore, in addition to this, a display depiction allowing ascertainment of the course-units already learnt may be displayed as well. For example, the listing shown in FIG. 1 may be displayed and the learnt course-units may be accentuated by way of highlighting and the like. Further, with respect to this listing, course-units giving rise to connections may be accentuated by way of employing a blinking display and the like. For example, where the items "shapes and equations" and "trigonometric ratios" are already learnt, these may be accentuated by way of highlighting and the like. Further, the item "trigonometric functions" may be accentuated by way of blinking display. By this arrangement, the upcoming course-unit for learning can be ascertained with ease. Moreover, the arrow in broken lines in FIG. 1 indicates the following connection: that, though the course-units themselves are not necessarily associated, the knowledge items included in the course-units are interrelated.

The assistance method pertaining to the present embodiment may be realized via an assistance device constituted by causing a computer coupled to a computer network to execute a program for performing the functionalities and processes explained below. It is not always necessary that the computer be unitary and a plurality of communicating computers may be used. It is also not necessary that the program be unitary.

### (Constitution of the Assistance Device)

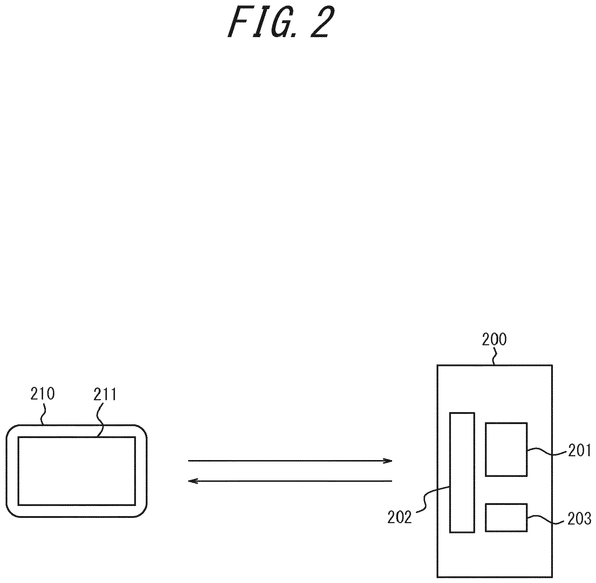

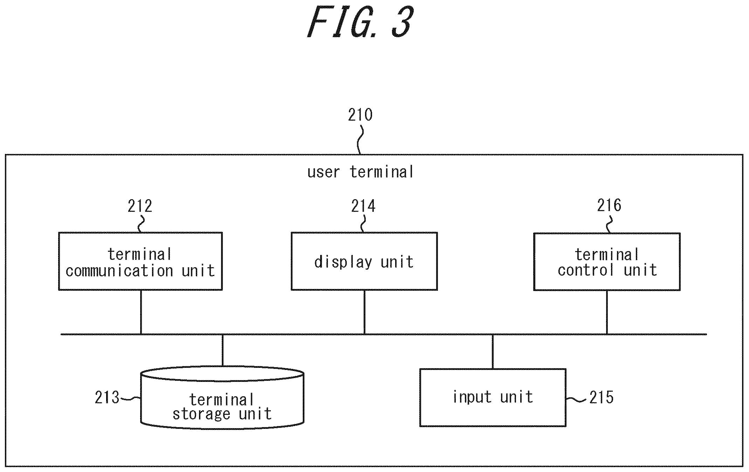

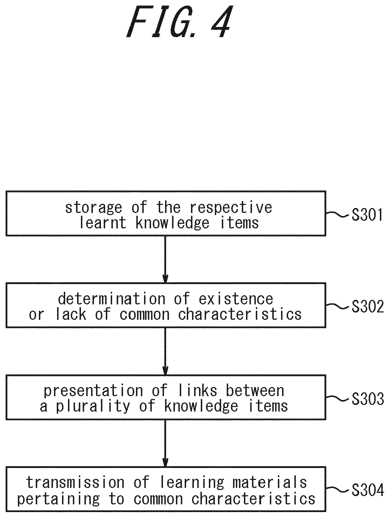

FIG. 2 shows an assistance device for assisting a user with the learning or utilization of connections between a plurality of knowledge items according to an embodiment of the invention. Assistance device 200 comprises: a processing unit 201 including CPUs and the like; a communication unit 202 including communication interfaces and the like; and a storage unit 203 including a memory, a hard disk and the like. Further, FIG. 3 shows a functional block diagram of a user terminal. Further, FIG. 4 shows an assistance method for assisting a user with the learning or utilization of connections between a plurality of knowledge items.

Storage unit 203 stores the respective knowledge items already learnt by the user (S 301). The learning process may, for example, proceed while entailing the following steps: the communication unit 202 sending question data to a user terminal 210 including terminals such as tablets, smartphones and the like; receiving, via communication unit 202, response data regarding the questions displayed on the display screen 211 of the user terminal 210; determining, on the basis of the received response data, the correctness/wrongness of responses for the questions, the determining performed by processing unit 201; and sending to the user terminal 210, commentary data corresponding to the determination result, the sending performed by communication unit 202. Processing unit 201 may further do the following: determine stats such as the correct response rate and the like from user response data regarding the plurality of questions; and compute the degree of comprehension of the respective users or respective students. The commentary data to be sent to user terminal 210 may be varied in accordance with the degree of comprehension of the user. With respect to the already learnt knowledge items, history relating to such for the respective users may be retained in a learnt knowledge table, and such table may be stored in storage unit 203 or a storage device accessible from assistance device 200.

### (Constitution of the User Terminal)

Constitution of the user terminal 210 shall be explained below. FIG. 3 illustrates a functional block diagram of user terminal 210. User terminal 210 comprises: a terminal communication unit 212; a terminal storage unit 213; a display unit 214; an input unit 215; and a terminal control unit 216.

Terminal communication unit 212 communicates with external devices either wirelessly or via wire, and is an interface for sending and receiving information. In the present embodiment, terminal communication unit 212 is operable to send and receive information via the network to and from assistance device 200.

Terminal storage unit 213 may, for example, comprise a primary storage device and a secondary storage device, and may store the following: various information supplied by the assistance device 200 and programs necessary for information processing. For example, terminal storage unit 213 may, store a learning application (hereinafter, referred also as "learning app") pertaining to correspondence learning. The learning app may be obtained, via a network, from a prescribed distribution server. The actions pertaining to the present embodiment of user terminal 210 shall be realized in the state where the learning app has been executed (initiated).

Display unit 214 is a functional unit for displaying various display representations on display screen 211. Display unit 214 and display screen 211 may be compatible with display devices such as liquid crystal displays, organic electro luminescent displays and the like.

Input unit 215 is, for example, an input interface that is integrally provided on display unit 214 and display screen 211, such inclusive of touch-screens. Input unit 215 may receive input operations (hereinafter, referred also as "user input") such as user-initiated taps and the like directed to the user terminal. However, configuration is not limited to aforementioned and the input unit 215 may, for example, be provided separately from the display unit 215 as a keyboard or mouse and the like.

Terminal control unit 216 comprises a dedicated or a general purpose processor. Terminal control unit 216 controls the operation of the entirety of user terminal 210. For example, terminal control unit 216 performs, using terminal communication unit 212, sending and receiving of information via a network. Furthermore, terminal control unit 216 executes, in accordance with the user's operations, the learning app.

### (Learning Assistance Method)

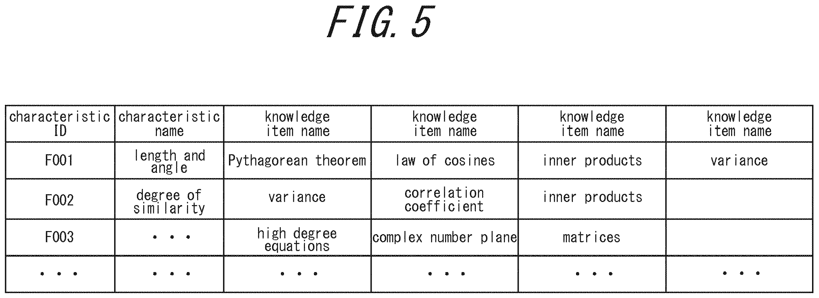

Where the user has learnt newly a knowledge item, the processing unit 201 determines whether there exist common characteristics with respect to the one or more already learnt knowledge items (S 302). As common characteristics, the following common concepts could, for example, be envisioned: "length and angle", "degree of similarity" and the like. Furthermore, as examples of common characteristics, common thinking types such as the following may also be envisioned: "strategies" including "thinking with a make-shift standard", "thinking from the conclusion", "thinking of the geometrical implication of the equation", "focusing on symmetry", and the like; "inferences" including "performing substitution on equations to arrive at conjectures" and the like; "organization" including "case classification", "summarization via tables", and the like; "conversion" including "introduction of variables", "thinking of the opposite", "taking the difference", and the like; and "cognizance" including "generalization", "thinking in concrete terms", "thinking of the correspondence between the equation and the geometric representation", and the like. A characteristics table retaining the correspondence relationship between the knowledge items and characteristics may be stored in storage unit 203 or a storage device accessible from assistance device 200. Characteristics of common concepts, thinking types, and the like may be determined by referring to such table. In relation to such, a learnt knowledge table may also be referred to on an as-needed basis. Furthermore, there is nothing in preventing the merging of the characteristics table and learnt knowledge table into one table. Concepts, thought types, and the like may be sorted in a category-wise manner (e.g. "strategies", "inferences", and the like). Although the present discussion focusses on the common characteristics found with respect to the knowledge items already learnt by the user and the newly learnt knowledge items, certain knowledge items may be deemed as learnt knowledge based on the user's learning state; even if the user had not actually engaged in learning activities accompanied by learning materials to be provided by assistance device 200. FIG. 5 is an example of a characteristics table. As shown in FIG. 5, the following items are stored in correspondence: characteristic ID that uniquely identifies the record; characteristic name; the respective knowledge item names. By referring to the characteristics table, the characteristics of the respective learnt knowledge items may be determined. Furthermore, the characteristics table may cluster the course-units and may present course-units belonging to the same cluster in a manner akin to the method entailing the characteristics table. Clustering may employ known techniques such as the K-means method and the like. For example, when solving a quadratic equation, if the experience is to consummate within a single course-unit, the available solutions would be limited. Yet, in reality, there are several solutions such as factoring, completing the square, and the like. If the learning spans multiple course-units, inter-course-unit connections would be grasped. Hence, it would be possible to gain an overall understanding regarding the various approaches.

Where there exist common characteristics, the communication unit 202 sends, to the user terminal 210, data for presenting the connections between the plurality of knowledge items sharing the characteristics (S 303). The details for presenting the connections shall be discussed later.

The presentation of common characteristics may involve displaying, on the display screen 211 of the user terminal 210, the existence of such characteristics, such display attained through some form of display form. In such case, in the event that the user selects said display via actions such as a tap, click, and the like, the communication unit 202 may transmit to the user terminal 210 the following learning material data: learning material data pertaining to learning materials such as commentary movies and exercise questions and the like, such materials pertaining to said characteristics, such data stored on storage unit 203 or a storage device accessible from assistance device 200 (S 304). One can also swiftly bestow upon the learner the cognition of having observed the moment a knowledge item has connected with another knowledge item by not waiting for the user's elective act and adopting the following configuration: automatically engaging in the presentation and transmission of learning materials once the assistance device 200 determines the existence of common characteristics.

As is apparent, the present embodiments pertaining to assistance methods and assistance devices seek to address the fact that conventional learning suffered from course-unit-wise segmentation. The present embodiments greatly improve the learning process by causing a entity on the assistance-device-side to determine the existence of connections between a plurality of knowledge items and the user is appropriately notified or presented with such information. As a result, a wholly novel learning experience may be delivered.

As has been explained, the invention may be understood with respect to the subject called mathematics, in which the subject matter is segmented into multiple domains, the domains being at least one or two or more of algebra, geometry, analysis, and statistics, the learning process entailing a process like learning knowledge items of the respective domains. Alternatively, the invention may be understood with respect to a learning process where the chronological extent of learning is long, even within the same domain. In such contexts, the student will have a hard time autonomously discovering the organic connections between the knowledge items learnt so far. In view of this, the present invention entails a configuration where: the student is notified once a connection is formed amongst the learnt knowledge items; and the student is provided with exercise questions. By such configuration, the student becomes cognizant of the existence of such connections and is able to master utilization techniques thereof.

Moreover, the above discussion concerns instances where the respective knowledge items already learnt by the user are stored on the assistance device 200, such stored records may be prepared on devices separate from the assistance device 200. For example, the learnt knowledge table may be stored on the user terminal 210. Furthermore, though it has been explained that the assistance device 200 performs the determination of the existence of common characteristics, other separate devices inclusive of the user terminal 210 may also perform the processing pertaining to determination. The same applies to the transmission of data for presenting the connections concerning the plurality of knowledge items. For example, data necessary for presentation may be stored within the user terminal 210 and in the event of determining that there exist common characteristics, presentation may be performed by utilizing said data. In order to have user terminal 210 cover all or part of the functionalities or processes, an application should be installed into user terminal 210, the install taking place beforehand or afterwards, and the terminal control unit 216 of user terminal 210 would then be executing said application. The following would also be included in an aspect of the invention: letting the assistance device 200 do the determination and, in accordance with the determination results, executing, at the user terminal 210, necessary processes for doing the presentation.

### (Examples pertaining to the Concept of "Length and Angle" and the Concept of "Degree of Similarity")

FIG. 6 illustrates an example for presenting, to the user, the concepts of "length and angle" and "degree of similarity", such concepts presented as common characteristics. In this example, the following knowledge items within the domain of geometry shall be learnt in a chronological order corresponding to the order in which they are listed: "Pythagorean theorem"; "law of cosines"; and "inner products (of vectors)". "Law of cosines" is included in the item labeled "trigonometry" in FIG. 1. "Inner products" is included in the item labeled "vectors" in FIG. 1. A common feature is noticed between the following items: "Pythagorean theorem"; "law of cosines"; and "inner products (of vectors)". The law of cosines is a generalization of the Pythagorean theorem in which scope is extended from right triangles to generalized triangles, and both are theorems expounding on the relationship between two sides and the angle between them and the remaining side. Inner products are defined by the magnitude of two vectors and the angle formed by them, and this corresponds to the law of cosines expressed in terms of vectors. Both can be said to concern lengths and angles. Furthermore, with respect to "algebraic definitions" wherein "algebraic definitions" are to be introduced with respect to vectors and inner products, -- vectors are defined only through addition, differences, and integer multiplication, and -- inner products are defined as operation to be effected on two vectors. As the "geometric definition" and "algebraic definition" coincide with respect to inner products (i.e. the "algebraic definition" is an extension of the "geometric definition"), it becomes possible to deal with shapes in both algebraic and geometrical manners. Next, assume that "variance" is to be learnt as a knowledge item within the domain of statistics. In such instance, subsequent to the user having finished the learning-unit of "variance", processing unit 201 may make reference to the learnt knowledge table and characteristics table on an as needed basis. Amongst the four knowledge items, it can be determined that the concept "length and angle" is a common characteristic, and, as shown in FIG. 4, same can be presented as a common characteristic. In concrete terms, "variance" is viewed as an inner product when a column of data is deemed to be a vector. Thus, the common characteristic can be said to be "length and angle". Moreover, said characteristic corresponds to the record with the characteristic ID of F001 in the characteristics table of FIG. 5. Moreover, the items "variance" and "correlation coefficient" are included in "data analysis" of FIG. 1.

Next, it is assumed that "correlation coefficient" is learnt as a knowledge item belonging to the domain of statistics. Where these are to be learnt in such progression, and where the user has finished the learning-unit of "correlation coefficient", processing unit 201 may make reference to the learnt knowledge table and characteristics table in an as-needed manner and may determine that these three knowledge items share the concept of "degree of similarity". Then, as shown in FIG. 6, the common characteristic may be presented. Moreover, said characteristic corresponds to the record with the characteristic ID of F002 in the characteristics table of FIG. 5.

In concrete terms, the degree of similarity between numbers can be realized from the sign of the multiplication of numbers. The following concept is obtained: "if the product obtained is positive then the tendency is same". In algebraic terms, the "inner product" serves as an indicator of the degree of similarity of vectors by going through multiple multiplication operations of numbers. If the inner product is positive, then the two vectors are of the same tendency and if the inner product is negative, then it is understood that there is an opposite tendency. "(Co)variance" is a concept that has removed, from the inner product, the bias stemming from the average, and measures the deviation from the average. It can be said that covariance is a transformed form of the inner product, the transformation turning the inner product into a tool of sorts. Further, via conceptualization of the "inner product", an expression entailing the regularization of the angle and cosine value is obtained. Further, the regularized form of the covariance is the "correlation coefficient" and it shall be realized that it is a tool for computing a similar degree of similarity.

With respect to FIG. 6 (a) and (b) it is noted that the existence of common characteristics is displayed on the display screen 211 of the user terminal 210, said existence being displayed in the following manner: by connecting with arcs, the names or abbreviations of the plurality of knowledge items for which common characteristics exist. Besides the names or abbreviations of the respective knowledge items, symbols of the respective knowledge items may be used, and such may even be connected with straight lines, circles and the like. As illustrated, where there exist common characteristics for two or more knowledge items, enhanced communication of the organic connection may be facilitated by adopting the following presentation mode: connecting the respective knowledge items in a ring-shaped manner to give rise to a ring of knowledge (aka knowledge-ring).

The following configuration may be adopted: causing data for displaying at least one of a commentary movie or exercise questions, such concerning said characteristics, to be sent to the user terminal 210 in the event that the user selects the arcs, straight lines and the like connecting the respective knowledge items, such selection by way of actions such as clicks, taps, and the like.

The existence of common characteristics may be notified or presented to the user in a more explicit manner by utilizing any of the following modes: displaying the names, abbreviations or symbols of the characteristics on the display screen 211 of the user terminal 210; performing push-notifications with respect to the user terminal 210; and other like modes.

FIG. 6 has given as examples of common characteristics, the common concepts pertaining to "length and angle" and "degree of similarity". The same will be appreciated for thought-types.

FIG. 6 has presented the existence of common characteristics pertaining to the following four knowledge items: "Pythagorean theorem"; "law of cosines"; and "inner products (of vectors)"; and "variance". As illustrated, common characteristics may be shared between a knowledge item belonging to the domain of geometry and a knowledge item belonging to the domain of statistics, the latter (i.e. statistics) being a domain different from the former (i.e. geometry). As is apparent, the assistance device of the present embodiment would allow easy ascertainment of organic connections between knowledge items belonging to different domains (i.e. connections spanning different domains). Furthermore, embodiments are not limited to such, and common characteristics may be shared by knowledge items chronologically separated, in terms of learning progression by or more than by a prescribed number of chronological units. By doing so, even with respect to subject matter learnt after the elapse of a prescribed period, it would be easy to appreciate the organic connection between such items.

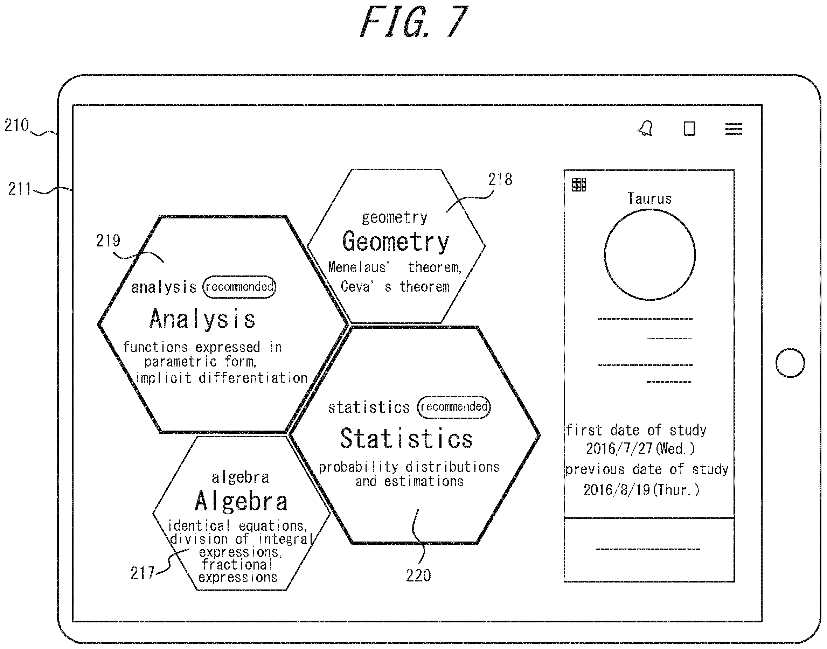

Moreover, assistance device 200 may, recommend, to the user, knowledge items (course-units) that would be preferable for subsequent learning thereafter. For example, assistance device 200 may, present, to the respective user terminals, at least one of the knowledge items preferable for subsequent learning. FIG. 7 illustrates an example in which the respective user terminals 210 recommend, to the user, course-units for subsequent learning. FIG. 7 is a top-level screen of a mathematics course. For example, the assistance device 200 presents, on the top-level screen displayed by the user terminal 210, course-units that are fit for being learnt next.

On the top-level screen of the mathematics course, selection areas (217-220) for selecting the respective domains of learning (e.g. algebra, analysis, geometry, and statistics) are displayed. All the course-units included in the respective domains are given their respective learning progression order. The assistance device 200 extracts, out of the course-units not worked-on by the respective users, the course-unit with the smallest learning order identifier, the extraction being done for the respective domains. Moreover, the course-units not worked-on by the respective users are determined by referring to the learnt knowledge table. The assistance device 200 displays, on the selection areas (217-220) of the top-level screen, the extracted course-units. For example, with respect to the example given in FIG. 7, in connection with analysis, "functions expressed in parametric form, implicit differentiation" is extracted and displayed. Similarly, for algebra, "identical equations, division of integral expressions, fractional expressions" is extracted and displayed. Similarly, for geometry, "Menelaus' theorem, Ceva's theorem" is extracted and displayed. Similarly, for statistics, "probability distributions and estimations" is extracted and displayed.

Furthermore, assistance device 200 presents, based on the course-units extracted, course-units preferable for subsequent learning. In overall terms, assistance device 200 presents course-units belonging to domains that have witnessed only relatively low levels of learning activity, such being presented as course-units preferable for subsequent learning. In particular, assistance device 200 performs the following: compares the learning order of the course-units extracted from the respective domains; and determines the course-units having the smallest and the next smallest learning order identifier. In the example of FIG. 7, it shall be assumed that "functions expressed in parametric form, implicit differentiation" and "probability distributions and estimations" are the course-units having the smallest and the next smallest learning order identifier out of the course-units extracted respectively from the four domains. In this case, assistance device 200 displays, in an accentuated manner, the determined course-units, on the top-level screen. In FIG. 7, the following are displayed in an accentuated manner: a selection area 219 for selecting analysis; and a selection area 220 for selecting statistics. To give an example of accentuated display, it is noted that selection areas 219 and 220 are both displayed in larger sizes compared to selection areas 217 and 218. Furthermore, the respective selection areas advertise their recommendation status by displaying phrases such as "recommended". Knowledge items belonging to the domains subjected to said accentuated display correspond to the course-units preferable for subsequent learning. As such, assistance device 200 causes user terminal 210 to present, on the top-level screen, course-units preferable for subsequent learning.

Other than the above, methods for identifying knowledge items (course-units) preferable for learning may adopt various techniques. For example, assistance device 200 may perform the following: identify, based on the knowledge items already learnt by the user and the characteristics table, knowledge items preferable for subsequent learning; and present, to the respective user terminals, said knowledge items. In this instance, in concrete terms, assistance device 200 obtains, on the basis of the learnt knowledge table, knowledge items that the user has already learnt. Furthermore, assistance device 200 may identify, based on the characteristics table, learning-course-units connected to at least one of the learnt knowledge items obtained from the learnt knowledge table. Where the user has already learnt multiple knowledge items and where there are multiple knowledge items having connections to said already learnt knowledge items, the following may be performed: identify, in a random manner, at least one of the multiple knowledge items. As an alternative to performing the identification in a random manner, for example, where the user's degree of comprehension is high with respect to a portion of the multiple knowledge items that are already learnt, the user terminal may also present knowledge items connected to the knowledge items for which there is exhibited a high degree of comprehension, the presented knowledge items being presented as knowledge items fit for subsequent learning. On another note, any of the following also may be implemented: perform machine learning on the activities of other learners in order to revise the connections and add recommendation; allow users to input their recommended learning progression order and reflect such input if a certain degree of opinion consolidation is attained; add or delete links in accordance with Bayesian theory; and combine with it tools that analyze the past entrance examination papers of universities such as the University of Tokyo and the like.

As is apparent, assistance device 200 causes the user terminal to present the knowledge item to be learnt next. By doing so, knowledge items and the like belonging to domains in which learning progress is relatively retarded may be recommended, and this would allow the user to easily and efficiently conduct learning without having to explicitly focus on the details.

Moreover, the user may also conduct learning with respect to knowledge items other than those recommended by the assistance device 200. For example, it shall be assumed that within the learning domain of "geometry", the following learning order is to be recommended: "planar shapes" then "shapes in space". In this case, the user may also be allowed to learn "shapes in space" prior to "planar shapes". Furthermore, where certain conditions are met (e.g. where the user's comprehension of shapes in space and related knowledge items is high and other similar situations), the degree of comprehension of planar shapes may be deemed to be high, and said knowledge items may even be skipped. In the present embodiment, as the learning of several knowledge items progresses, the following would be provided: knowledge rings, commentary movies and exercise questions regarding the common characteristics. Thus, it would be possible to assess the user's degree of comprehension at each stage. For example, with respect to exercise questions regarding the common characteristics, should the student fail to solve said problems, assistance device 200 may also recommend knowledge items relating to said problems, the recommendation recommending such knowledge items as knowledge items to be learnt next. By adopting such configuration, assistance device 200 of the present embodiment allows the learning progression order to be flexibly altered. Thus, an efficient learning process may be facilitated based on the user's motivation levels as to learning and the user's interests.

In the above, the user would select the arcs, straight lines and the like connecting the respective knowledge items, the selection using clicks, taps and the like. This would cause the data for displaying at least one of a commentary movie or exercise questions regarding the characteristics to be sent to the user terminal 210. However, embodiments need not be limited to such, and as mentioned earlier, such may also be automatically sent. In other words, after having user terminal 210 present the connections, commentary regarding the characteristics may be displayed, and subsequent to the display of the commentary, exercise questions regarding the characteristics may be displayed. By doing so, the communication of organic connections between the knowledge items may be further streamlined and the student would be allowed to appreciate such connections at a deeper level.

The invention has been explained on the basis of the drawings and the working examples. It should be understood that the skilled person would easily attain various adaptations and modifications on the basis of this disclosure. Thus, it should be understood that such adaptations and modifications would be included within the scope of the invention. For example, the functionality and the like included in the respective means, steps and the like may be rearranged so as not to cause logical inconsistency, and the plurality of means, steps and the like may be combined into one or may be divided. Below shall be transcribed the inventions recited in the claims of the previous application, such concerning the "as filed" state.
[1] An assistance method for assisting users with learning or utilization of connections between a plurality of knowledge items, the method characterized in that the method comprises:
   storing respective knowledge items learnt by a user;
   determining whether there exist common characteristics between knowledge items learnt newly by the user and one or more of the knowledge items already learnt by the user; and
   responsive to the existence of common characteristics, causing the user's terminal to present a connection between a plurality of knowledge items in which the characteristics are shared.
[2] The assistance method of [1], characterized in that the characteristics include common concepts.
[3] The assistance method of [1], characterized in that the characteristics include thinking-types.
[4] The assistance method of any of [1]-[3], characterized in that the determination is performed by referring to a characteristics table having retained thereon correspondence relationships between knowledge items and characteristics.
[5] The assistance method of [4], characterized in that the characteristics table retains characteristics in a category-wise sorting.
[6] The assistance method of [4] or [5], characterized in that the determination is performed by referring to a learnt-knowledge table having retained thereon learnt knowledge items for respective users.
[7] The assistance method of any of [1]-[6], characterized in that the presentation step includes: displaying, on a display screen of the terminal, names, abbreviations or symbols of a plurality of knowledge items for which common characteristics exist, along with the existence of the common characteristics.
[8] The assistance method of [7], characterized in that the existence of the common characteristics is displayed by connecting the names, abbreviations or symbols of the plurality of knowledge items.
[9] The assistance method of [8], characterized in that the names, abbreviations or symbols of the plurality of knowledge items are connected by lines or arcs.
[10] The assistance method of [8], characterized in that the plurality of knowledge items comprise three or more knowledge items, and
   the names, abbreviations or symbols of the plurality of knowledge items are connected in a ring-shaped manner entailing designation as knowledge ring(s).
[11] The assistance method of [7], characterized in that the existence of the common characteristics is displayed by the names, abbreviations or symbols of the characteristics.
[12] The assistance method of any of [7]-[11], characterized in that the method further comprises: causing the terminal to send, responsive to election of displaying of the existence of the common characteristics, data for displaying at least one of a commentary movie or exercise questions regarding the characteristics.
[13] The assistance method of any of [1]-[12], characterized in that the respective knowledge items comprise one or more learning-units.
[14] The assistance method of any of [1]-[13], characterized in that knowledge items targeted for learning by the user belong to any of a plurality of domains.
[15] The assistance method of [14], characterized in that the knowledge items targeted for learning comprise knowledge items related to mathematics.
[16] The assistance method of [15], characterized in that the plurality of domains comprise at least one or two from a group consisting of: algebra, geometry, analysis, and statistics.
[17] The assistance method of any of [14]-[16], characterized in that the common characteristics are common to both a first knowledge item belonging to a first domain and a second knowledge item belonging to a second domain different from the first domain.
[18] The assistance method of any of [14]-[16], characterized in that the common characteristics are common to both a first knowledge item and a second knowledge item in the same domain as the first knowledge item, the second knowledge item chronologically separated, in terms of learning progression, from the first knowledge item by or more than by a prescribed number of chronological units.
[19] A program for causing a computer to execute an assistance method for assisting users with learning or utilization of connections between a plurality of knowledge items, the assistance method characterized in that it comprises:
   determining whether there exist common characteristics between knowledge items learnt newly by the user and one or more of the knowledge items already learnt by the user; and
   responsive to the existence of common characteristics, causing, the connection between the plurality of knowledge items in which the characteristics are shared, to be presented on the display screen of the user's terminal.
[20] An assistance device for assisting users with learning or utilization of connections between a plurality of knowledge items, characterized in that it involves:
   determining whether there exist common characteristics between knowledge items learnt newly by the user and one or more of the knowledge items already learnt by the user; and
   responsive to the existence of common characteristics, causing, the connection between the plurality of knowledge items in which the characteristics are shared, to be presented on the display screen of the user's terminal.

### REFERENCE SIGNS LIST

- 200: assistance device
- 201: processing unit
- 202: communication unit
- 203: storage unit
- 210: user terminal
- 211: display screen
- 212: terminal communication unit
- 213: terminal storage unit
- 214: display unit
- 215: input unit
- 216: terminal control unit
- 217-220: selected area

## Claims

1. An assistance method via an assistance device for assisting with learning, the assistance device comprising:
storing knowledge items learnt by a user;
determining whether there exist common characteristics between knowledge items learnt newly by the user and at least one of the knowledge items already learnt by the user; and
responsive to the existence of common characteristics, causing the user's terminal to present the existence of the characteristics.

2. The assistance method of claim 1, wherein the characteristics include at least either common concepts or thinking-types.

3. The assistance method of claim 1 or claim 2, wherein the determination is performed by referring to a characteristics table having retained thereon correspondence relationships between knowledge items and characteristics.

4. The assistance method of claim 3, the assistance method further comprising:
recommending to a user, based on the knowledge items already learnt by the user and the characteristics table, knowledge items for subsequent learning.

5. The assistance method of any of claims 1-4, wherein the determination is performed by referring to a learnt-knowledge table having retained thereon learnt knowledge items for respective users.

6. The assistance method of any of claims 1-5, wherein the step causing presentation includes:
displaying, on a display screen of the terminal, names, abbreviations or symbols of a plurality of knowledge items for which common characteristics exist, along with the existence of the common characteristics.

7. The assistance method of claim 6, wherein the existence of the common characteristics is displayed by connecting the names, abbreviations or symbols of the plurality of knowledge items.

8. The assistance method of claim 7, wherein the plurality of knowledge items comprises two or more knowledge items, and
wherein the names, abbreviations or symbols of the plurality of knowledge items are connected in a ring-shaped manner.

9. The assistance method of claim 6, wherein the existence of the common characteristics is displayed by the names, abbreviations or symbols of the characteristics.

10. The assistance method of any of claims 6-9, further comprising:
causing the terminal to display, responsive to election of displaying of the existence of the common characteristics, at least one of a commentary movie or exercise questions regarding the characteristics.

11. The assistance method of any of claims 1-10, further comprising:
causing the terminal to: display, subsequent to the step causing presentation, a commentary pertaining to the characteristics; and display, subsequent to the display of the commentary, exercise questions pertaining to the characteristics.

12. The assistance method of any of claims 1-11, wherein the respective knowledge items comprise one or more learning-units.

13. The assistance method of any of claims 1-12, wherein knowledge items targeted for learning by the user belong to any of a plurality of domains.

14. The assistance method of claim 12 or claim 13, wherein the common characteristics are common to both a first knowledge item belonging to a first domain and a second knowledge item belonging to a second domain different from the first domain.

15. The assistance method of claim 12 or claim 13, wherein the common characteristics are common to both a first knowledge item and a second knowledge item in the same domain as the first knowledge item, the second knowledge item chronologically separated, in terms of learning progression, from the first knowledge item by or more than by a prescribed number of chronological units.

16. A program for causing a computer functioning as a learning assistance device to execute code for:
determining whether there exist common characteristics between knowledge items learnt newly by a user and at least one of the knowledge items already learnt by the user; and
responsive to the existence of common characteristics, causing the existence of the characteristics to be presented on the display screen of the user's terminal.

17. An assistance device for:
determining whether there exist common characteristics between knowledge items learnt newly by a user and at least one of the knowledge items already learnt by the user; and
responsive to the existence of common characteristics, causing the existence of the characteristics to be presented on the display screen of the user's terminal.
